# EUROPÄISCHE PATENTANMELDUNG

(11) **EP 4 442 429 A1**
(43) Veröffentlichungstag der Anmeldung: **09.10.2024**
(21) Anmeldenummer: 24167351.6
(22) Anmeldetag: 28.03.2024
(51) Int. Cl.: B29C 49/06, B29C 49/12, B29C 49/02, B29C 49/70, B29C 49/78, B29L 31/00, B29C 49/58

(54) **WERKZEUG UND VERFAHREN ZUR HERSTELLUNG EINES SPRITZBLASGEFORMTEN BEHÄLTNISSES**

(30) Priorität: 03.04.2023 DE 102023108439
(71) Anmelder: FORMCONSULT WERKZEUGBAU GmbH, 98574 Schmalkalden (DE)
(72) Erfinder: METZ, Uwe, 98574 Schmalkalden (DE); ENDER, Holm, 98593 Floh-Seligenthal (DE); STREMOUS, Wladimir, 98617 Meiningen (DE); HOFFMANN, Stephan, 98547 Viernau (DE)
(74) Vertreter: Kleine, Hubertus

(57) **Zusammenfassung**

Ein Werkzeug (3) einer Spritzgussmaschine zum Ausbilden eines spritzblasgeformten Behälters (2), umfassend
a. einen Spritzbereich (4) zum Ausbilden eines Vorspritzlings (1) und
b. einen vom Spritzbereich (4) räumlich getrennten Blasbereich (5) zum Umformen des Vorspritzlings (1) unter Ausbildung des spritzblasgeformten Behälters (2),
wobei der Blasbereich (5) eine Blaseinheit (4) zum Einleiten eines Blasmediums, vorzugsweise von Druckluft, in einen Hohlraum des Vorspritzlings (1) aufweist, wobei der Blasbereich (5) eine Haltevorrichtung (15) zum Halten des Vorspritzlings (1) aufweist und wobei die Blaseinheit (30) einen gegenüber der Haltevorrichtung (15) beweglich gelagerten baren Streckkern (33) zum mechanischen Vorstrecken des Vorspritzlings (1) aufweist.

## Beschreibung

Die Erfindung betrifft ein Werkzeug zur Herstellung eines spritzblasgeformten Behältnisses, eine Spritzgussmaschine mit diesem Werkzeug und ein Verfahren zum Herstellen eines solchen Behältnisses.

Die Herstellung von spritzblasgeformten Behältern in einem mehrstufigen Prozess mit einem einzigen Werkzeug ist an sich bekannt.

Die DE 3 811 465 A1, die US 3 838 961 A, die US 3 838 961 A, die US 3 887 316A, die US 4 077 759 A, die US 4 818 213 A und die CN 111 516 245 A offenbaren jeweils Vorrichtungen, in welchen eine Kombination aus Blasvorrichtung und Spritzgussvorrichtung zur Herstellung eines spritzblasgeformten Behälters genutzt wird. An ein- und derselben Position im Werkzeug erfolgt sowohl ein Spritzgießen als auch ein anschließendes Ausformen durch Einleiten eines Blasmedium. Diese Technologie hat zumeist einen komplizierten und auch störungsanfälligen Aufbau. Die kombinierte Blas- und Spritzgusseinheit kann überdies nacheinander das Spritzen und Blasformen ausführen, so dass während des Blasformens kein weiteres Spritzen eines Vorspritzlings erfolgen kann. Der Vorteil der Technologie ist allerdings, dass das relativ weiche Kunststoffmaterial unmittelbar nach dem Spritzen durch das Blasmedium umformbar ist. Dadurch braucht das Blasmedium nur mit geringem Druck in den Vorspritzling eingeleitet werden. Dies verringert die Anforderungen an die Dichtigkeit des Werkzeugs, um ein Entweichen des Blasmediums an falscher Stelle zu verhindern. Das Blasmedium sollte idealerweise in einem definierten Druckbereich gehalten werden.

Die WO 2012/135678 A2 offenbart eine rotierbare Anordnung, wobei ein Vorspritzling durch Rotation um 180° von einer Spritzposition in eine Blasposition umsetzbar ist. Weiterer relevanter Stand der Technik wird in der DE 21 48 616 A offenbart. Beide Vorrichtungen haben den Nachteil, dass durch das Umsetzen bereits ein Erkalten des Vorspritzlings erfolgt. Dadurch wird das anschließende Blasformen erschwert und es müssen höhere Drücke für das Blasmedium zum Ausformen des Vorspritzlings zum Behälter genutzt werden. Dies wiederum bedingt komplizierte Maßnahmen zur Abdichtung des Blasbereichs gegenüber dem Spritzbereich und nach außen. Dichtvorrichtungen müssen zugleich wärmebeständig sein, aufgrund des benachbarten Spritzbereichs. Insgesamt ist der Aufbau des Werkzeugs nicht mit Standard-Bauteilen des Spritzgusses und der Blasformtechnik realisierbar. Aufgabe der Erfindung ist es daher ein Werkzeug mit ein einem einfachen Aufbau bereitzustellen, welches zugleich das Fertigen mit kurzer Zykluszeit erlaubt. Weiterhin ist es Aufgabe der vorliegenden Erfindung ein Verfahren zum Betrieb eines entsprechenden Werkzeugs bereitzustellen.

Die erfindungsgemäße Aufgabe wird gelöst durch ein Werkzeug zum Ausbilden eines spritzblasgeformten Behälters mit den Merkmalen des Anspruchs 1.

Weiter wird die Aufgabe durch das Bereitstellen eines Verfahrens mit den Merkmalen des Anspruchs 12 gelöst.

Das erfindungsgemäße Werkzeug einer Spritzgussmaschine zum Ausbilden eines spritzblasgeformten Behälters, umfasst
a. einen Spritzbereich zum Ausbilden eines Vorspritzlings und
b. einen vom Spritzbereich räumlich getrennten Blasbereich zum Umformen des Vorspritzlings unter Ausbildung des spritzblasgeformten Behälters,

Im Blasbereich ist eine Blaseinheit zum Ausformen des spritzgeblasenen Behälters unter Einleiten eines Blasmediums, insbesondere von Druckluft, angeordnet.

Räumlich getrennt heißt in diesem Zusammenhang, dass der Spritzbereich an einer anderen Position des Werkzeugs angeordnet ist als der Blasbereich. Beide Bereiche sind von der selben Seite - der Öffnungsseite - zugänglich und Produkte und Zwischenprodukte können von dieser Seite her dem jeweiligen Bereich entnommen oder zugeführt werden.

Der Blasbereich weist eine Haltevorrichtung zum Halten des Vorspritzlings auf. Die Haltevorrichtung ist ausgebildet zum automatisierten Umsetzen des Vorspritzlings von einer Position im Spritzbereich auf eine Position im Blasbereich innerhalb des Werkzeugs, insbesondere bei geöffnetem Werkzeug.

Durch das automatisierte Umsetzen sind im Werkzeug definierte Bereiche ausgebildet in welchen die jeweiligen Prozessschritte räumlich getrennt und damit kontrolliert ausführbar sind. Dabei sind die Prozessschritte des Spritzgießens und des Blasformens parallel und damit zeitgleich ausführbar, so dass es zu einer Verringerung der Zykluszeiten kommt. Zugleich sind für beide Bereiche des Werkzeugs Standard-Bauteile des Spritzguss-Technik und der Blasform-Technik verwendbar, wodurch eine Reparatur unkompliziert möglich wird, bei gleichzeitiger guter Verfügbarkeit der Austausch-Bauteile.

Um eine weitere Optimierung der Prozessbedingungen zu ermöglichen, weist die Blaseinheit überdies einen gegenüber der Haltevorrichtung beweglich gelagerten Streckkern zum mechanischen Vorstrecken des Vorspritzlings auf. Das mechanische Vorstrecken ermöglicht eine deutliche Reduzierung des aufzubringenden Mediumsdrucks zum Blasformen des Behälters. Diese Verringerung des Drucks ermöglicht einen einfacheren Aufbau des Werkzeugs, zumal geringere Anforderungen an die Dichtheit des Werkzeugs, z.B. entlang der Öffnungsebene, gestellt werden. Insbesondere kann der Vorspritzling noch warm bzw. heiß und damit besser verformbar sein. Durch die kurze Zeit des Umsetzens bleibt der Kunststoff des Vorspritzlings leicht verformbar und kann damit definiert vorgestreckt werden.

Vorteilhafte Ausgestaltungen der Erfindung sind Gegenstand der Unteransprüche.

Vorteilhaft kann der Streckkern linear verschiebbar in Bezug auf die Haltevorrichtung ausgebildet sein. Eine solche Linearbewegung kann in konstruktiv-einfach und kompakter Art und Weise durch einen Linearantrieb und/oder eine Linearführung realisiert werden.

Die Haltevorrichtung kann einen oder mehrere Schieber mit einer oder mehreren verfahrbaren Schieberbacken umfassen. Auf diese kompakte Art und Weise wird der Vorspritzling während des Umsetzens und des Blasformens sicher gehalten werden.

Der Spritzbereich kann eine Lanze zur Ausformung des Hohlraums des Vorspritzlings aufweisen. Vorzugsweise definiert die Lanze den Hohlraum des Vorspritzlings. Dies wird ermöglicht, indem die Lanze einen Teil einer Kavität zur Einleitung einer Kunststoffschmelze unter Ausformung des Spritzgießlings bildet.

Die Blaseinheit kann ebenfalls eine Lanze aufweisen, wobei der Streckkern als Teil der Lanze ausgebildet ist. Die Lanze liegt während des Streckens nur stirnseitig am Vorspritzling an. Dies verhindert das rasche Abkühlen des unaufgeblasenen Vorspritzlings im Blasbereich und ermöglicht ein gleichmäßiges mechanisches Vorstrecken und zentrierten des Vorblaslings. Lokale Ungleichmäßigkeiten der Wandstärke bei der Ausbildung des Behälters werden dadurch vorteilhaft vermieden.

Die Position der Lanze im Spritzbereichs definiert eine Spritzgussposition des Vorspritzlings und die Position der Lanze der Blaseinheit des Blasbereichs definiert eine Blasposition. Das Werkzeug weist überdies eine Werkzeugaufspannplatte auf. Die Haltevorrichtung ist gegenüber der Werkzeugaufspannplatte rotierbar gelagert, derart, dass ein Vorspritzling zum Zwecke des Umsetzens durch Rotation von der Spritzgussposition in die Blasposition überführbar ist.

Für das Ausführen der Rotation kann die Spritzgussvorrichtung einen Antrieb aufweisen. Dieser Antrieb kann lösbar über eine Ankopplungsschnittstelle mit einer werkzeugseitigen Drehwelle der Haltevorrichtung oder einer damit verbundenen Indexplatte verbunden sein, so dass der Antrieb bei Austausch des Werkzeugs in der Spritzgussvorrichtung verbleibt.

Der Begriff Rotation umfasst selbstverständlich auch eine Teilrotation z.B. um 180° oder 90° oder dergleichen.

Die Haltevorrichtung kann gegenüber der Werkzeugaufspannplatte linear verfahrbar angeordnet sein, so dass der Vorspritzling von der Lanze abhebbar ist. Hierfür kann vorzugsweise und vorteilhaft der maschinenseitige Ausstoßbolzen verwendet werden. So kann eine kombinierte Drehführung und Linearführung zum Ausführen der Bewegung im Werkzeug kombiniert und angeordnet werden.

Die Haltevorrichtung kann als Teil einer linear-verfahrbaren und rotierbar gelagerten Indexplatte ausgebildet sein. Durch die Indexplatte kann besonders effektiv die Verschluss- bzw. Öffnungsebene des Werkzeugs insbesondere während des Spritzgießens verschlossen werden. Der entsprechende entwickelte Druck durch den flüssigen Kunststoff gegen den Verschluss des Werkzeugs wird durch die Indexplatte besonders effektiv aufgenommen und von der Kavität abgeleitet.

Das Werkzeug kann vorzugsweise pneumatisch, insbesondere ausschließlich pneumatisch, betrieben werden. Hydraulische Kernzüge, welche mit Öl als Hydraulikflüssigkeit betrieben werden, können dabei vorteilhaft zugunsten einer kompakten, lebensmittelechten, reinraumgeeigneten und störungsfreien Bauweise entfallen.

Das Werkzeug kann vorteilhaft eine Auswerfereinheit zum Auswerfen des spritzblasgeformten Behälters aufweisen, wobei in die Kavität zur Ausformung des spritzblasgeformten Behälters oder die Lanze der Blaseinheit eine Zulaufleitung zum Einleiten des Blasmediums mündet, derart, wobei die Zulaufleitung Auswerfen des spritzblasgeformten Behälters vorgesehen ist. Dadurch kann die Druckluft, die zum Ausformen des Behälters genutzt wird, besonders effektiv auch für das Auswerfen des Behälters genutzt werden.

Weiterhin erfindungsgemäß ist eine Spritzgussmaschine zur Herstellung eines spritzblasgeformten Behälters umfassend das erfindungsgemäße vorbeschriebene Werkzeug.

Ebenfalls erfindungsgemäß ist ein Verfahren zum Betrieb der vorgenannten erfindungsgemäßen Spritzgussmaschine umfassend die folgenden Schritte:
i Öffnen des Werkzeugs;
   Durch das Öffnen des Werkzeugs wird ein spritzgegossener Vorspritzling und ein ausgeformter Behälter zugänglich gemacht.
ii Auswerfen des spritzgeblasenen Behälters;
   Das Auswerfen kann durch Druckluft erfolgen, welche ohnehin für das Ausformen während des Blasformens benötigt wird.
iii Umsetzen des Vorspritzlings von einem Spritzbereich in einen Blasbereich;
   Das Umsetzen des Vorspritzlings kann über eine Kombination von mehreren Bewegungen, insbesondere einer Linearbewegung und einer Rotationsbewegung, erfolgen.
iv Schließen des Werkzeugs
   Das Schließen des Werkzeugs erfolgt vorzugsweise durch das Zufahren einer Auswerferseite und einer Düsenseite unter Ausbildung einer Öffnungsebene.
v Ausformen eines weiteren Vorspritzlings im Spritzbereich des Werkzeugs und Umformen des im Spritzbereichs gefertigten Vorspritzlings zu einem blasgeformten Behälter im Blasbereich des Werkzeugs;

Das Ausformen des Vorspritzlings und das Umformen zu dem Behälter kann vorzugsweise zeitgleich erfolgen. Das Umformen des Vorspritzlings kann vorteilhaft bei einem Druck des Blasmediums von weniger als 12 bar, vorzugsweise 4-10 bar, erfolgen. Dadurch werden die konstruktiven Anforderungen an das Werkzeug bezüglich der Dichtigkeit deutlich verringert.

Das Umformen des Vorspritzlings kann vorteilhaft zweistufig erfolgen, wobei in einer ersten Stufe ein mechanisches Vorstrecken des Vorspritzlings erfolgt und wobei in einer zweiten Stufe ein pneumatisches Ausformen zu dem blasgeformten Behälter durch Einleiten eines Blasmediums, insbesondere von Druckluft, erfolgt. Das Reduzieren des Drucks des Blasmediums ist u.a. auf das Vorstrecken zurückzuführen.

Das Umsetzen des Vorspritzlings kann vorteilhaft durch die folgenden Schritte erfolgen:
I Anheben des Vorspritzlings von der Lanze im Spritzbereich;
II Rotation der Haltevorrichtung mit welcher der Vorspritzling gehalten, ist um eine Drehachse, insbesondere um die vorgenannte Drehwelle, und
III Absenken des Vorspritzlings auf die Lanze der Blaseinheit.

Schließlich kann das Auswerfen des spritzgeblasenen Behälters in Schritt 1 durch Zuleiten von Druckluft erfolgen.

Die Erfindung wird anhand der nachfolgenden Figuren anhand eines Ausführungsbeispiels näher erläutert. Die einzelnen Details des Ausführungsbeispiels sind in keinster Weise als beschränkend für den Gegenstand der vorliegenden Erfindung anzusehen. Vielmehr ergeben sich aus dem Ausführungsbeispiel für den Fachmann zahlreiche weitere Abwandlungsvarianten, die ebenfalls Teil der vorliegenden Erfindung sind. Es zeigt:
- Fig. 1: Seitenansicht auf ein Zwischenprodukt des erfindungsgemäßen Verfahrens zur Herstellung des spritzblasgeformten Behältnisses und auf eine Ausführungsvariante eines erfindungsgemäß hergestellten Behältnisses;
- Fig. 2: Schnittansicht durch eine erfindungsgemäße Vorrichtung zum Spritzblasformen des Behältnisses; nur Düsenseite dargestellt
- Fig. 3: Darstellung eines ersten Schrittes des erfindungsgemäßen Verfahrens;
- Fig. 4: Darstellung eines zweiten Schrittes des erfindungsgemäßen Verfahrens;
- Fig. 5: Darstellung eines dritten Schrittes des erfindungsgemäßen Verfahrens;
- Fig. 6: Darstellung eines vierten Schrittes des erfindungsgemäßen Verfahrens;
- Fig. 7: Darstellung eines fünften Schrittes des erfindungsgemäßen Verfahrens;
- Fig. 8: Darstellung eines siebenten Schrittes des erfindungsgemäßen Verfahrens; nur Auswerferseite dargestellt
- Fig. 9: Perspektivansicht einer Blaseinheit mit geblasenem Artikel zum Einsatz in der erfindungsgemäßen Vorrichtung;
- Fig. 10: Schnittansicht der Blaseinheit der Fig. 10;
- Fig. 10a: Detailansicht eines Ausschnitts der Blaseinheit der Fig. 10.

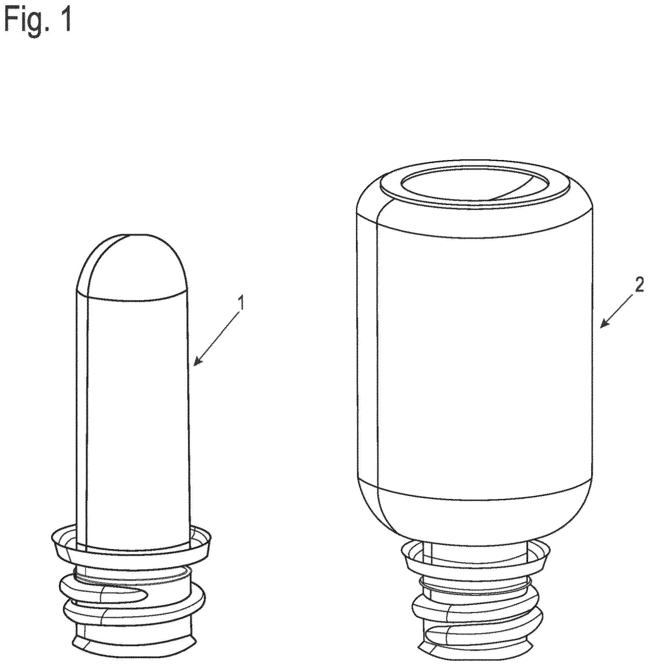

Fig. 1 zeigt auf der linken Seite einen durch das erfindungsgemäße Verfahren bereitgestellten sogenannten Vorspritzling 1, welcher sodann im weiteren Verlauf des erfindungsgemäßen Verfahrens zu einem spritzblasgeformten Behälter 2 umgeformt wird.

Dabei wird der Vorspritzling 1 in einem Werkzeug 3 zunächst spritzgegossen. Hierfür weist das Werkzeug 3 eine Spritzbereich 4 auf.

Sodann wird erfolgt in demselben Werkzeug 3 in einem Blasbereich 5 das Ausformen des noch heißen Vorspritzlings 1 zu dem Behälter 2 durch Vorstrecken und anschließendes Einblasen von Druckluft in den Vorspritzling 1.

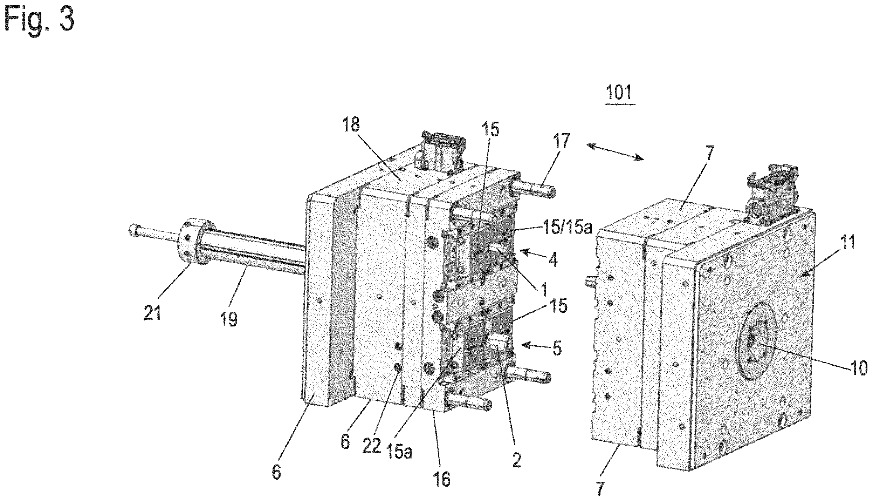

Fig. 3 zeigt das Werkzeug 3 zum Einsatz in eine nicht-näher dargestellte Spritzgussmaschine mit zumindest einer Auswerferseite 6 und einer Düsenseite 7. Dabei ist eine der beiden Seiten, relativ zur anderen Seite, zur Öffnung des Werkzeugs verfahrbar, insbesondere linear bewegbar, gelagert.

Die Anordnung aus Auswerferseite 6 und Düsenseite 7 definiert eine Öffnungsebene 8 und eine Öffnungs- und entgegengesetzte Schließrichtung S des Werkzeugs 3.

Senkreicht zur Öffnungsrichtung S ist die jeweilige Auswerferseite 6 und die Düsenseite 7 in den Spritzbereich 4 und den Blasbereich 5 unterteilt. Zur Zuführung des Spritzgießmediums 9 weist die Düsenseite 7 einen Heißkanal 10 auf, Dieser setzt mittig entlang einer Rückseite 11 der Düsenseite 7 an und verläuft innerhalb des Werkzeugs in 3 in Richtung des Spritzbereichs 4.

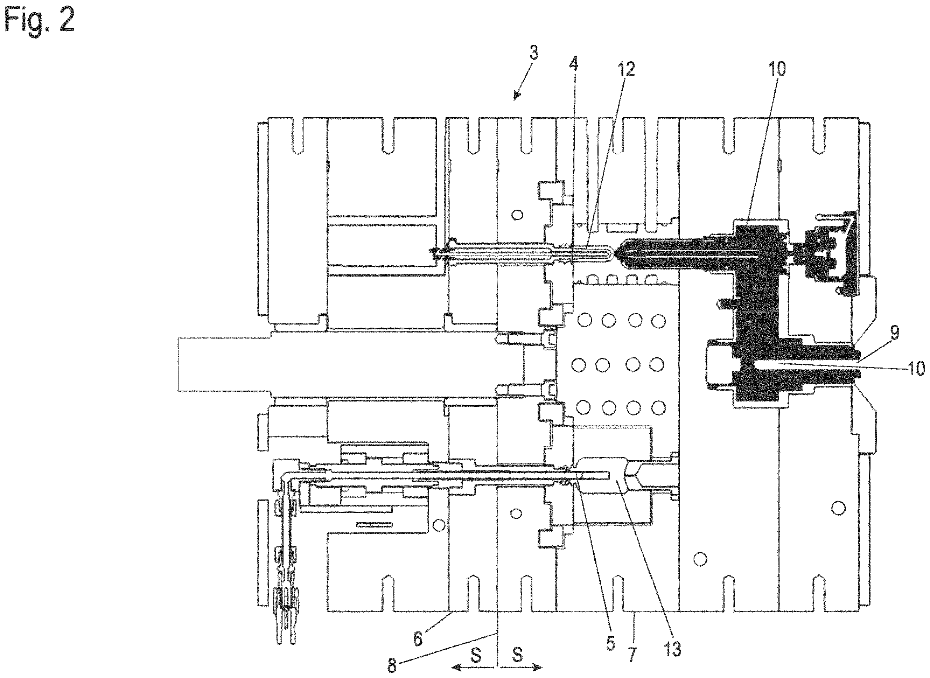

In dem besagten Spritzbereich 4 erfolgt ein Einleiten des fließfähigen Spritzgießmaterials 9 in eine zum Vorspritzling 1 korrespondierende Kavität 12 des Werkzeugs 3 über den besagten Heißkanal 10. Dies ist besonders gut in Fig. 2 dargestellt, in welcher der Heißkanal 10 besonders hervorgehoben wurde.

Benachbart dazu ist der Blasbereich 5 mit einer zum Behälter 2 korrespondierenden Kavität 13 angeordnet.

In den Eckbereichen des Werkzeugs 3 sind jeweils Linearführungsstäbe 17 angeordnet, welche das Öffnen und Schließen durch Linearbewegung zumindest einer der beiden Seiten gegenüber der jeweils anderen Seite, also Auswerferseite 6 und/oder der Düsenseite 7, in oder entgegen der Öffnungsrichtung S führt.

Die Auswerferseite 6 weist, vorzugsweise sowohl im Spritzbereich 4 als auch im Blasbereich 5 Auswerfereinheiten 14 auf, welche u.a. Haltevorrichtung 15, vorzugsweise umfassend einen oder mehrere Schieber 15a, zur umfangsseitigen Halterung des Vorspritzlings 1 und/oder der spritzblasgeformten Behälter 2 während des Umsetzens und/oder während des Öffnens aufweisen.

Die Haltevorrichtungen 15 können dabei einen Teil eines Formennestes begrenzen.

Die Auswerferseite 6 umfasst eine Anordnung aus mehreren in Öffnungsrichtung S übereinander angeordneten Platten. Stirnseitig weist die Auswerferseite 6 eine drehbar gelagerte Indexplatte 16 auf. Drehbare Indexplatten sind an sich seit vielen Jahren bekannt und sind u.a. bereits in der DE 101 45 461 A1 oder auch der DE 10 2005 005 202 A1 beschrieben.

Unterhalb der Indexplatte 16 ist sodann gefolgt von einer Werkzeug-Aufspannplatte 18 angeordnet. Die Werkzeug-Aufspannplatte kann - wie in dem vorliegenden Ausführungsbeispiel - mehrteilig, vorzugsweise mit mehreren übereinander angeordneten Platten, ausgebildet sein oder sie kann auch einteilig als eine einzige Werkzeug-Aufspannplatte ausgebildet sein.

Die Indexplatte 16 ist mit einer Drehwelle 19 verbunden. Diese Drehwelle 19 ist rotierbar gegenüber der Werkzeug-Aufspannplatte 18 gelagert. Hierfür weist die Werkzeugaufspannplatte 18 ein Drehlager 20 auf. Überdies ist die Drehwelle 19 linear verfahrbar in der Werkzeugaufspannplatte 18 geführt.

Die Drehwelle 19 steht rückseitig, insbesondere senkrecht, aus einer plattenförmigen Anschlussfläche des Werkzeugs 3 hervor. Die Drehwelle weist überdies eine Schnittstelle 21, hier in Form eines Antriebskranzes, auf.

Randseitig weist die Werkzeugaufspannplatte 18 Anschlüsse 22 zur Einleitung von Temperiermedien in Temperierkanäle innerhalb der Werkzeugaufspannplatte 18 auf.

Die Werkzeugaufspannplatte 18 weist im Blasbereich 5 eine hohlraumbildende Lanze 23 auf. Die Lanze 23 definiert einen Teil der Kavität 12.

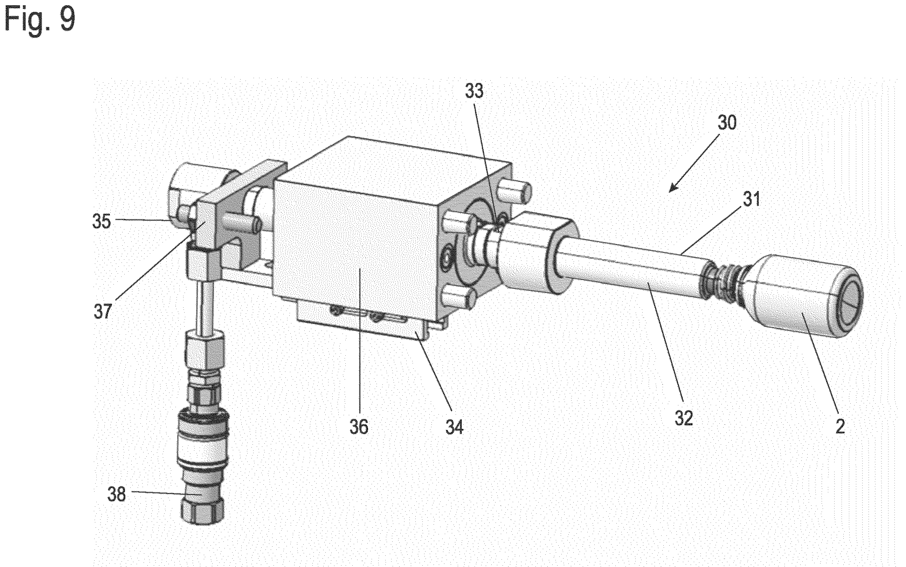

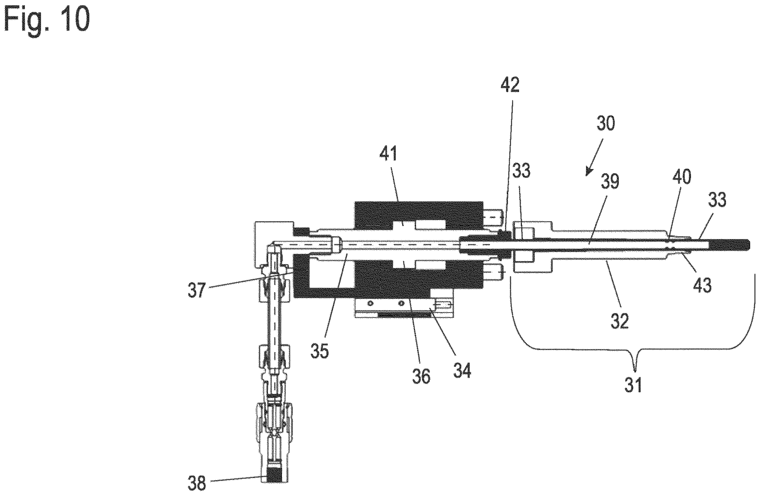

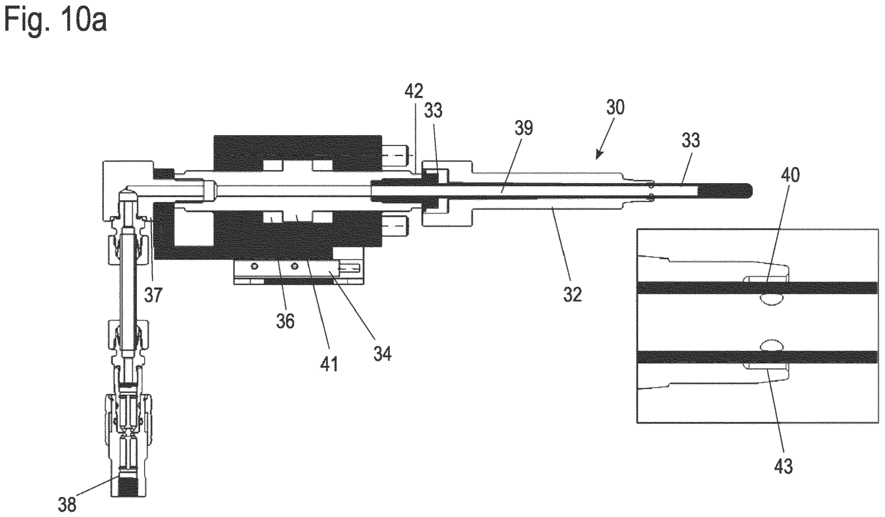

Weiterhin weist die Auswerferseite 6 eine Blaseinheit 30 auf, welche im Detail in Fig. 9, 10 und 10a dargestellt ist. Die Blaseinheit weist eine Lanze 31 zum Vorstrecken des Vorspritzlings 1 vor dem Ausformen zur finalen Form zu einem Behälter 2 durch Ausblasen durch eine Gaseinleitung. Die Indexplatte 16 ist derart ausgebildet, dass der Vorspritzling von der Kavität 12 mit der Lanze 23 abgehoben und über die Lanze 31 positionierbar ist. Dies erfolgt durch Teilrotation der Indexplatte 16, vorzugsweise um 180°.

Die Lanze 31 weist eine Aufnahmehülse 32 auf und einen relativ zur Aufnahmehülse 32 einen linear-verfahrbaren Streckkern 33 auf. An die Blaseinheit 30 schließt sich eine Endschaltereinheit 34 zur Abfrage einer Kolbenstellung an. Die Kolbenstellung bezieht sich auf eine mit dem Streckkern 33 fest-verbundene durch einen Antriebsvorrichtung 36 durchgehende Kolbenstange 35 auf. Die Antriebsvorrichtung 36 kann vorteilhaft einen Zylinder umfassen, durch welchen die Kolbenstange 35 linear bewegt werden kann.

Die Blaseinheit 30 weist überdies einen Einsteller 37 zur Einstellung einer Hubbegrenzung für das Vorstrecken des Vorspritzlings, insbesondere durch den Strecckern 33, auf. Dieser Einsteller 37 kann beispielsweise eine Hubplatte sein, welche fest mit dem Streckkern 33 verbunden ist.

Weiterhin weist die Blaseinheit 30 einen Blasmedienanschluss 38 zum Einleiten von Gas, insbesondere Blasluft, in den Innenraum des vorgestreckten Vorspritzlings auf. Der Blasmedienanschluss mündet in die Lanze 31. Der Streckkern 33 weist einen Blasmedien-Leitkanal 39 und endständige Gasdüsen 40 auf, welche beim Verfahren zum Zwecke des Vorstreckens des Vorspritzlings geöffnet werden, so dass der Streckkern zumindest im teilweise oder vollständig ausgefahrenen Zustand Gas, insbesondere Blasluft in den Innenraum des Vorspritzlings leitet.

Der Aufbau der Blaseinheit 30 und insbesondere der Lanze 31 und des Streckkerns 33 sind in Fig. 10a dargestellt. Man erkennt den Blasluftanschluss und den coaxial zur Längsachse der Lanze 31 verlaufenden Blasmedien-Leitkanal 39 auf. Die Aufnahmehülse 32 und die Antriebsvorrichtung 36 sind stationär am Werkzeug, z.B. an der Werkzeugaufspannplatte 18, angeordnet.

Die Kolbenstange 35 ist in Fig. 10 mit seinem Kolben 41 auf Anschlag gefahren, während der Kolben 41 der Kolbenstange 35 in Fig. 10a in einer ausgefahrenen Stellung innerhalb eines Hohlraumes der Antriebsvorrichtung angeordnet ist. Somit ist der Streckkern in Fig. 10a ausgefahren, während er in Fig. 10 in einer zurückgesetzten Grundstellung angeordnet ist. In der ausgefahrenen Stellung. Die Kolbenstange 35 ist über eine Haltemutter 42 mit dem Streckkern 33 verbunden. Der Gasdüsen 40 werden in der ausgefahrenen Stellung der Fig. 10a nicht mehr durch die Aufnahmehülse 32 überdeckt. Endständig ist zwischen dem Streckkern 33 und der Aufnahmehülse 32 ein durchgehender oder unterbrochener Ringspalt 43 vorgesehen, so dass die freigelegten Gasdüsen 40 im Ringspalt 43 in der ausgefahrenen Stellung der Fig. 10a angeordnet sind, in welche das Blasmedium einleitbar ist. Dadurch trifft das Blasmedium nicht unmittelbar auf den Kunststoff des Vorspritzlings, so dass lokale Verformungen vermieden werden. Vielmehr erfolgt eine Umleitung des Blasmediums durch den Ringspalt.

Das Verfahren zum Herstellen eines spritzblasgeformten Behälters wird nachfolgend anhand der Fig. 3-8 näher erläutert. Die Schritte werden zyklisch wiederholt, so dass jeder beliebige Schritt als Startpunkt für das Beschreiben des Verfahrens verwendet werden können.

In einem ersten Schritt 101 - dargestellt in Fig. 3 - erfolgt das Öffnen des Werkzeugs 3. Das Öffnen erfolgt entlang der Öffnungsebene 8. Dabei kann die Auswerferseite gegenüber der Düsenseite, die Düsenseite gegenüber der Auswerferseite oder beide Seiten gegeneinander verfahren werden. Diese beiden Werkzeugelemente können als Werkzeughälften ausgebildet sein. Die Verfahrbewegung zum Öffnen des Werkzeugs ist im Ausführungsbeispiel eine Linearbewegung. Es wird durch die Bewegung eine Öffnungsrichtung S definiert. Es sind allerdings auch Dreh oder Schwenkbewegungen zum Öffnen des Werkzeugs 3 im Rahmen der vorliegenden Erfindung realisierbar.

Die Linearführungsstäbe 17 dienen dabei zur Führung des oder der bewegten Bauteile des Werkzeugs und als Positionierungshilfe beim erneuten Schließen des Werkzeugs 3.

Durch das Öffnen des Werkzeugs 101 wird der spritzblasgeformte Behälter 2 und der Vorspritzling 1 zugänglich. Beide Produkte werden durch die geschlossenen Schieber 15a gehalten, wobei die Schieber 15a aus zumindest zwei Schieberbacken form- und/oder kraftschlüssig gehalten werden. Die Schieberbacken sind in dem vorliegenden Ausführungsbeispiel vorzugsweise gegeneinander und ebenfalls vorzugsweise senkrecht zur Öffnungsrichtung S linear verfahrbar.

Durch das Öffnen des Werkzeugs 3 werden zugleich die Kavitäten 12 und 13 geöffnet. Die Schieber 15a zum Halten des Vorspritzlings 1 sind zunächst geschlossen. Die Schieber 15a in der Blasseite 5 können automatisch durch die Werkzeugöffnung S geöffnet werden.

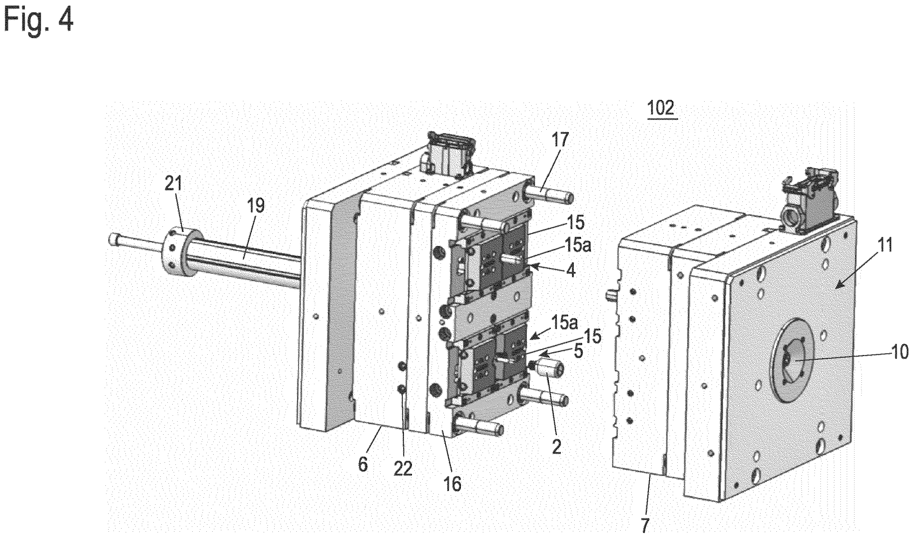

In einem zweiten Schritt 102 - dargestellt in Fig. 4 - erfolgt das Auswerfen des spritzgeblasenen Behälters 2. Das Auswerfen erfolgt in der Variante der Fig. 4 durch Mediendruck z.B. durch Blasluft. Alternativ oder zusätzlich kann der Blasbereich auch Auswerferelemente, z.B. Auswerferstangen, aufweisen, um ein mechanisches Auswerfen zu ermöglichen. Das Auswerfen mittels Blasluft ist allerdings besonders praktisch, da eine Einleitungsvorrichtung für Blasluft ohnehin für das Ausformen des Vorspritzlings vorgesehen ist. Dadurch sind keine weiteren Bauteile zum Auswerfen notwendig, wodurch sich der mechanische Aufbau der Auswerferseite 6 des Werkzeugs 3 vereinfacht.

Zum Auswerfen wird der Schieber 15a des Blasbereichs 5 geöffnet. In der Variante in Fig. 4 erfolgt dies durch Linearbewegung der Schieberbacken voneinander weg. Während der Schieber 15a des Spritzbereichs 4 ungeöffnet bleibt und damit der Vorspritzling 1 gehalten wird, wird der Schieber 15a des Blasbereichs 5 geöffnet und gibt den blasgeformten Behälter frei.

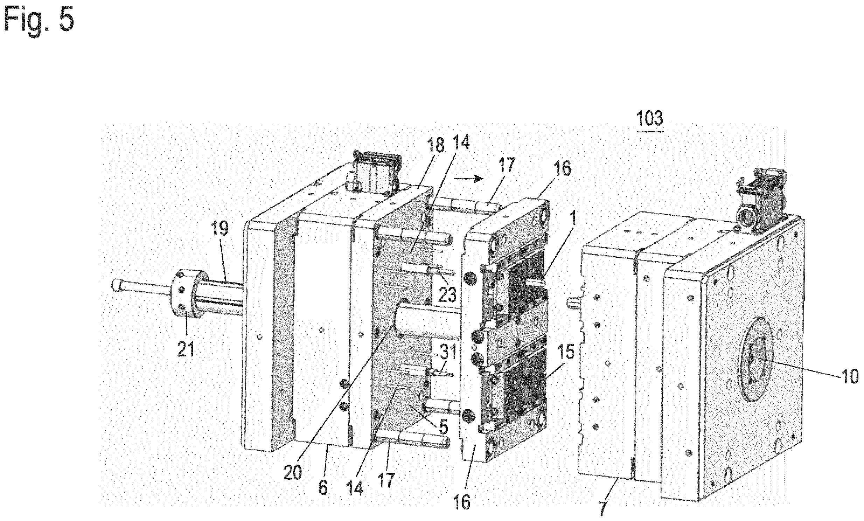

In Fig. 5 wird sodann der dritte Schritt 103 des erfindungsgemäßen Verfahrens dargestellt. Dabei wird die Indexplatte mit den Schiebern 15 und dem darin gehaltenen Vorspritzling 1 gegenüber der Werkzeugaufspannplatte 18 angehoben. Dies erfolgt durch Linearbewegung der Drehwelle 19 parallel zur Öffnungsrichtung R des Werkzeugs. Sodann wird die Drehwelle 19 durch einen nicht dargestellten Antrieb rotiert, so dass die Indexplatte um 180° gewendet wird. Je nach Positionierung des Blas- und des Spritzbereichs sind auch andere Lösungen möglich in welchem die Indexplatte lediglich um einen geringeren Winkel z.B. 90° rotiert wird. Dies wäre z.B. der Fall wenn zwei gegenüberliegende Blasbereiche und zwei gegenüberliegende Spritzbereiche in einem Werkzeug vorgesehen sind. Das Anheben der Indexplatte 16 gegenüber der Werkzeugaufspannplatte 18 erfolgt dabei um einen Betrag, welcher zumindest der Höhe der Lanze 23 entspricht, so dass die Lanze 23 nicht die Rotationsbewegung der Indexplatte 16 behindert. Koppelstäbe der Auswerfereinheiten 14, welche zum Antrieb der Schieberbacken genutzt werden, stehen ebenfalls aus der Werkzeugaufspannplatte 18 hervor.

Der Vorspritzling 1, welche vom Schieber 15a gehalten wird, ist oberhalb des Spritzbereichs 4 angeordnet.

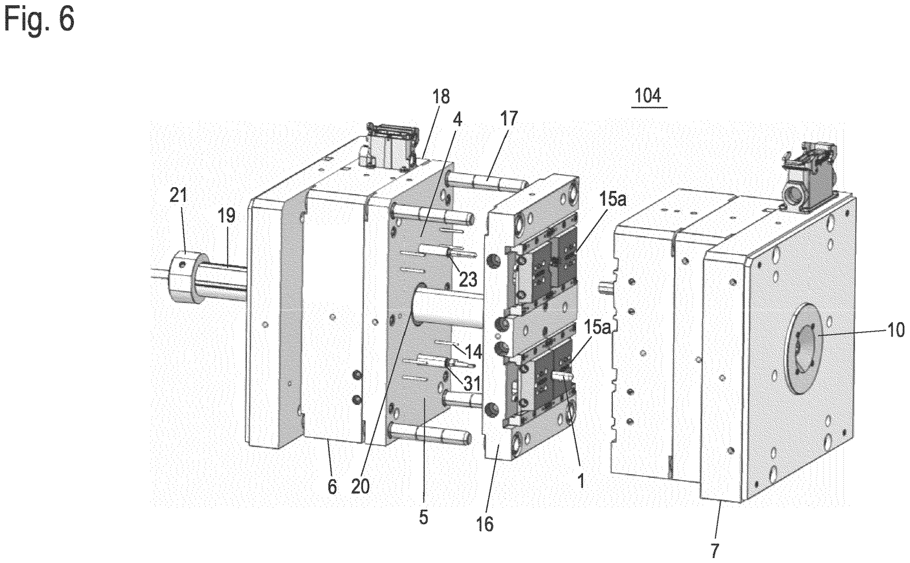

In Fig. 6 wird in einem vierten Schritt 104 die Indexplatte 16 rotiert. Der Vorspritzling 1 wird über der Lanze 31 der Blaseinheit 30 im Blasbereich 5 angeordnet und auf der Lanze 31 abgesetzt. Dabei befindet sich der Blaskern 33 im eingefahrenen Zustand, siehe Fig. 10.

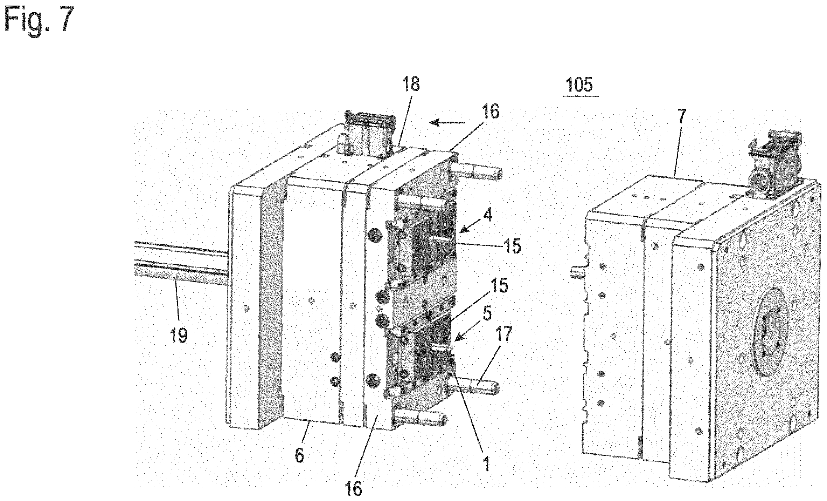

In Fig. 7 wird in einem fünften Schritt die Indexplatte 16 wieder auf Anschlag auf die Werkzeugaufspannplatte 18 zurückgefahren. Im Spritzbereich steht nunmehr die Lanze 23 teilweise gegenüber der Indexplatte hervor. Diese Lanze 23 definiert die Form, insbesondere den Hohlraum des Vorspritzlings 1, gemeinsam mit weiteren kavitätsbildenden Bereichen der Düsenseite 7. Zugleich ist der Vorspritzling auf der Lanze 31 der Blaseinheit 30 positioniert und kann in eine düsenseitige Kavität mit der Kontur des spritzgeblasenen Behälters 2 eingeführt werden.

Schließlich erfolgt das einem nicht-dargestellten allerdings leicht nachvollziehbaren sechsten Schritt das Zusammenfahren der Düsenseite und der Auswerferseite mit dem Zweck des Spritzgießens eines weiteren Vorspritzlings im Spritzbereich 4 bei vorzugsweise gleichzeitigem Ausformen des blasgeformten Behälters im Blasbereich 5 durch Mediendruck, insbesondere durch den Druck der Blasluft.

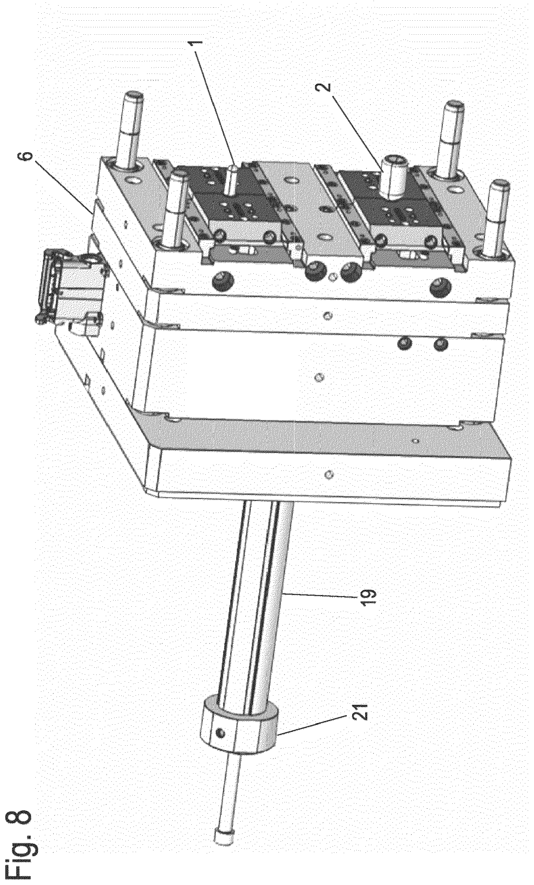

Dies erfolgt in einem fünften Schritt des Verfahrens, welcher anhand der Darstellung der Fig. 8 - hier nur mit der Auswerferseite - erkennbar ist. Die Düsenseite des geschlossenen Werkzeugs wurde aus Gründen der besseren Darstellung weggelassen.

Wie anhand Fig. 9, 10 und 10a erkennbar erfolgt das Blasformen in zwei Schritten. Zunächst in einem Vorstecken des Vorspritzlings durch lineares Verfahren des Streckkerns 33, wodurch der Mediendruck zum finalen Ausformen des Behälters verringert wird. Durch die Kombination aus Spritzguss und Blasformen wird eine möglichst kompakte Bauform für die Blaseinheit 30 benötigt. Während ein direktes Ausblasen bei höheren Drücken der Blasluft zusätzliche konstruktive Anforderungen an die Dichtheit des Systems erfordert, kann durch das Vorstrecken der Gasdruck zum Ausblasen verringert werden. Dadurch verringern sich auch die Anforderungen an die Abdichtung des Gesamtsystems, insbesondere auch gegenüber dem Spritzbereich, der Werkzeugaufspannplatte und den weiteren Bauteilen des Werkzeugs.

Das Verfahren wird durch Ansteuerung der einzelnen Komponenten der Spritzgussmaschine oder einzelner Werkzeugkomponenten, wie z.B. der Schieber 15a bzw. der übergeordneten Auswerfereinheiten 14 oder auch des Antriebs der Drehwelle 19 zur Rotation und zur Linearbewegung der Indexplatte 16 und/oder eines Antriebs der Spritzgussmaschine zum Öffnen und Schließen des Werkzeugs 3 erfolgen. Dies erfolgt typischerweise durch eine Steuereinheit als Teil der Spritzgussmaschine welche zur Ansteuerung zur Ausführung der vorgenannten Verfahrensschritte eingerichtet ist.

Das erfindungsgemäße Werkzeug kann in einer konventionellen Spritzgussmaschine, z.B. in einer Einkomponenten-Spritzgussmaschine, eingesetzt werden.

Dabei ist lediglich eine Vorrichtung zum Drehen der Indexplatte z.B ein Kernzug oder ähnliches erforderlich.

Besonders von Vorteil ist, dass der Mediumsdruck, insbesondere der Luftdruck, zum Ausformen der Behälter unter 12 bar, vorzugsweise zwischen 6-10 bar, gewählt werden kann. Bei diesem vergleichsweise geringen Mediumsdruck kann die Blaseinheit und der gesamte Blasbereich kompakt aufgebaut sein, da bei diesem Druck lediglich geringe Anforderungen an die Dichtigkeit des Systems gestellt werden.

Dabei können zum Aufbau der Blaseinheit zum Großteil standardisierte Bauteile genutzt werden.

Das Umsetzen der Vorspritzlinge von dem Spritzbereich 4 in den Blasbereich 5 erfolgt automatisiert bei vergleichsweise geringen Zykluszeiten mittels der rotierbaren Indexplatte und dem gesteuerten Schiebermechanismus.

Die Ausführung des erfindungsgemäßen Verfahrens kann in einem Reinraum erfolgen, in welchem die Spritzgussmaschine zumindest teilweise oder vollständig angeordnet ist. Somit sind Produkte, insbesondere Behälter, für Medizinanwendungen und/oder pharmazeutische Anwendungen realisierbar.

Mit dem Verfahren können grundsätzlich alle spritzgussfähigen Kunststoffe verarbeitet werden. Besonders praktikabel hat sich dabei allerdings PET, also Polyethylenterephthalat oder COP (Cyclo Olefin Polymer) insbesondere bei den vorgenannten Druckbereichen in Kombination mit dem Vorstrecken, erwiesen.

### Bezugszeichen

- 1: Vorspritzling
- 2: Spritzblasgeformter Behälter
- 3: Werkzeug
- 4: Spritzbereich
- 5: Blasbereich
- 6: Auswerferseite
- 7: Düsenseite
- 8: Öffnungsebene
- 9: Spritzgießmedium
- 10: Heißkanal
- 11: Rückseite
- 12: Kavität
- 13: Kavität
- 14: Auswerfereinheiten
- 15: Haltevorrichtung
- 15a: Schieber
- 16: Indexplatte
- 17: Linearführungsstäbe
- 18: Werkzeug-Aufspannplatte
- 19: Drehwelle
- 20: Drehlager
- 21: Schnittstelle
- 22: Anschlüsse (Temperiermedium)
- 23: Lanze

- 30: Blaseinheit
- 31: Lanze
- 32: Aufnahmehülse
- 33: Streckkern
- 34: Endschaltereinheit
- 35: Kolbenstange
- 36: Antriebsvorrichtung
- 37: Einsteller
- 38: Blasmedienschluss
- 39: Blasmedien-Leitkanal
- 40: Gasdüsen
- 41: Kolben
- 42: Haltemutter
- 43: Ringspalt

- 101 Schritt -: Öffnen des Werkzeugs
- 102 Schritt -: Auswerfen des spritzgeblasenen Behälters
- 103 Schritt -: Anheben der Indexplatte
- 104 Schritt -: Rotation der Indexplatte
- 105 Schritt -: Zurückfahren der Indexplatte

- S: Öffnungsrichtung

## Patentansprüche

1. Werkzeug (3) einer Spritzgussmaschine zum Ausbilden eines spritzblasgeformten Behälters (2), umfassend
a. einen Spritzbereich (4) zum Ausbilden eines Vorspritzlings (1) und
b. einen vom Spritzbereich (4) räumlich getrennten Blasbereich (5) zum Umformen des Vorspritzlings (1) unter Ausbildung des spritzblasgeformten Behälters (2),
wobei der Blasbereich (5) eine Blaseinheit (4) zum Einleiten eines Blasmediums, vorzugsweise von Druckluft, in einen Hohlraum des Vorspritzlings (1) aufweist,
**dadurch gekennzeichnet, dass**
der Blasbereich (5) eine Haltevorrichtung (15) zum Halten des Vorspritzlings (1) aufweist,
wobei die Blaseinheit (30) einen gegenüber der Haltevorrichtung (15) beweglich gelagerten Streckkern (33) zum mechanischen Vorstrecken des Vorspritzlings (1) aufweist.

2. Werkzeug nach Anspruch 1, **dadurch gekennzeichnet, dass** die Haltevorrichtung (15) ausgebildet ist zum automatisierten Umsetzen des Vorspritzlings (1) von einer Position im Spritzbereich (4) auf eine Position im Blasbereich (5).

3. Werkzeug nach Anspruch 1 oder 2, **dadurch gekennzeichnet, dass** der Streckkern (33) linear verschiebbar in Bezug auf die Haltevorrichtung (15) ausgebildet ist.

4. Werkzeug nach einem der vorhergehenden Ansprüche, **dadurch gekennzeichnet, dass** der Spritzbereich (4) eine Lanze (23) zur Ausformung des Hohlraums des Vorspritzlings (1) aufweist, wobei die Lanze (23) einen Teil einer Kavität (12) zur Einleitung einer Kunststoffschmelze unter Ausformung des Vorspritzlings (1) bildet.

5. Werkzeug nach einem der vorhergehenden Ansprüche, **dadurch gekennzeichnet, dass** die Blaseinheit (30) eine Lanze (31) aufweist, wobei der Streckkern (33) als Teil der Lanze (31) ausgebildet ist.

6. Werkzeug nach einem der vorhergehenden Ansprüche, **dadurch gekennzeichnet, dass** die Position der Lanze (23) im Spritzbereichs (4) eine Spritzgussposition des Vorspritzlings (1) definiert und dass die Position der Strecckerns (33) der Blaseinheit (30) des Blasbereichs (4) eine Blasposition definiert,
wobei das Werkzeug (3) eine Werkzeugaufspannplatte (18) aufweist und wobei die Haltevorrichtung (15) zum automatisierten Umsetzen gegenüber der Werkzeugaufspannplatte (18) rotierbar gelagert ist, derart, dass ein Vorspritzling (1) durch Rotation von der Spritzgussposition in die Blasposition überführbar ist.

7. Werkzeug nach einem der vorhergehenden Ansprüche, **dadurch gekennzeichnet, dass** die Haltevorrichtung (15) gegenüber der Werkzeugaufspannplatte (18) linear verfahrbar angeordnet ist, so dass der Vorspritzling (1) von der Lanze (23) im Spritzbereich (4) abhebbar ist.

8. Werkzeug nach einem der vorhergehenden Ansprüche, **dadurch gekennzeichnet, dass** die Haltevorrichtung (15) als Teil einer linear-verfahrbaren und rotierbar gelagerten Indexplatte (16) ausgebildet ist.

9. Werkzeug nach einem der vorhergehenden Ansprüche, **dadurch gekennzeichnet, dass** das Werkzeug (3) pneumatisch, insbesondere ausschließlich pneumatisch, betrieben wird.

10. Werkzeug nach einem der vorhergehenden Ansprüche, **dadurch gekennzeichnet, dass** das Werkzeug (3) eine Auswerfereinheit (14) zum Auswerfen des spritzblasgeformten Behälters (2) aufweist, wobei in die Kavität (13) zur Ausformung des spritzblasgeformten Behälters (2) oder die Lanze (31) der Blaseinheit (30) eine Zulaufleitung zum Einleiten des Blasmediums mündet, derart, wobei die Zulaufleitung Auswerfen des spritzblasgeformten Behälters (2) vorgesehen ist.

11. Spritzgussmaschine zur Herstellung eines spritzblasgeformten Behälters (2) umfassend ein Werkzeug (3) nach einem der vorhergehenden Ansprüche

12. Verfahren zum Betrieb einer Spritzgussmaschine nach einem der vorhergehenden Ansprüche **gekennzeichnet durch die folgenden Schritte:**
i Öffnen des Werkzeugs (3)
ii Auswerfen des spritzgeblasenen Behälters (2) (Schritt 102);
iii Umsetzen des Vorspritzlings (1) von einem Spritzbereich (4) in einen Blasbereich (5);
iv Schließen des Werkzeugs (3);
v Ausformen eines weiteren Vorspritzlings (1) im Spritzbereich (4) des Werkzeugs (3) und Umformen des im Spritzbereichs (4) gefertigten Vorspritzlings (1) zu einem blasgeformten Behälter (2) im Blasbereich (5) des Werkzeug (3),
wobei das Umformen des Vorspritzlings (1) bei einem Druck des Blasmediums von weniger als 12 bar, vorzugsweise 4-10 bar, erfolgt.

13. Verfahren nach Anspruch 12, **dadurch gekennzeichnet, dass** das Umformen des Vorspritzlings (1) zweistufig erfolgt, wobei in einer ersten Stufe ein mechanisches Vorstrecken des Vorspritzlings (1) erfolgt und wobei in einer zweiten Stufe ein pneumatisches Ausformen zu dem blasgeformten Behälter (2) durch Einleiten eines Blasmediums, insbesondere von Druckluft, erfolgt.

14. Verfahren nach einem der vorhergehenden Ansprüche 12 oder 13, **dadurch gekennzeichnet, dass** das Umsetzen des Vorspritzlings durch folgende Schritte erfolgt:
I Anheben des Vorspritzlings von der Lanze im Spritzbereich;
II Rotation der Haltevorrichtung mit welcher der Vorspritzling gehalten, ist um eine Drehachse und
III Absenken des Vorspritzlings auf die Lanze der Blaseinheit.

15. Verfahren nach einem der vorhergehenden Ansprüche, **dadurch gekennzeichnet, dass** das Auswerfen des spritzgeblasenen Behälters (2) (Schritt 102) durch Zuleiten von Blasmedium, insbesondere von Druckluft.
